# EUROPÄISCHE PATENTSCHRIFT

(11) **EP 0 951 934 B1**
(45) Veröffentlichungstag und Bekanntmachung des Hinweises auf die Patenterteilung: **13.06.2001**
(21) Anmeldenummer: 98107373.7
(22) Anmeldetag: 23.04.1998
(51) Int. Cl.: B01D 63/04, B01D 63/08, B01D 65/00

(54) **Vorrichtung zum Filtern und Trennen von Strömungsmedien mit wenigstens einem Permeatauslass**
Filtration and separation apparatus for fluids having at least one permeate outlet
Dispositif de filtration et de séparation de fluides pourvu d'au moins une sortie pour le perméat

(43) Veröffentlichungstag der Anmeldung: 27.10.1999
(73) Patentinhaber: Rochem RO-Wasserbehandlung GmbH, 20355 Hamburg (DE)
(72) Erfinder: Heine, Wilhelm, 21077 Hamburg (DE)
(74) Vertreter: Niedmers, Ole, Dipl.-Phys.

(56) Entgegenhaltungen:
- FR-A- 1 585 386
- FR-A- 2 234 912
- PATENT ABSTRACTS OF JAPAN vol. 096, no. 008, 30.August 1996 & JP 08 108050 A (UBE IND LTD), 30.April 1996, -& DATABASE WPI Section Ch, Week 9627 Derwent Publications Ltd., London, GB; Class D15, AN 96-262832 XP002081047
- PATENT ABSTRACTS OF JAPAN vol. 018, no. 597 (C-1273), 15.November 1994 -& JP 06 226062 A (DAICEL CHEM IND LTD), 16.August 1994, -& DATABASE WPI Section Ch, Week 9437 Derwent Publications Ltd., London, GB; Class A88, AN 94-298928 XP002081048
- PATENT ABSTRACTS OF JAPAN vol. 095, no. 003, 28.April 1995 & JP 06 343836 A (UBE IND LTD;OTHERS: 01), 20.Dezember 1994, -& DATABASE WPI Section Ch, Week 9510 Derwent Publications Ltd., London, GB; Class J01, AN 95-069411 XP002081049
- PATENT ABSTRACTS OF JAPAN vol. 007, no. 285 (C-201), 20.Dezember 1983 & JP 58 163407 A (NITTO DENKI KOGYO KK), 28.September 1983,

## Beschreibung

Die Erfindung betrifft eine Vorrichtung zum Filtern und Trennen von mit Fremdstoffen angereicherten Strömungsmedien (Rohmedien), insbesondere von flüssigen Medien, nach dem Prinzip der Ultrafiltration, mittels einer Membrantrenneinrichtung.

Vorrichtungen dieser Art sind in den unterschiedlichsten Ausgestaltungen seit geraumer Zeit bekannt und werden für die unterschiedlichsten Trennzwecke und für die unterschiedlichsten zu trennenden Strömungsmedien eingesetzt, beispielsweise für gasförmige Strömungsmedien, dampfförmige Medien oder auch für flüssige Medien. Ein Einsatzgebiet, das in zunehmendem Maße sowohl an wirtschaftlicher als ökologischer Bedeutung in den Vordergrund rückt, ist die Trennung von kommunalen und gewerblichen Abwässern, die sehr stark mit biologischen Fremdstoffen vermischt sind. Diese Strömungsmedien in Form von kommunalen und gewerblichen Abwässern, im folgenden kurz Abwässer genannt, stellen an die Konstruktion derartiger Vorrichtungen und an die in den Vorrichtungen verwendeten Membrantrenneinrichtungen in bezug auf die Effektivität der Trennung der Abwässer in Reinwasser als gewonnenes Permeat und das als Konzentrat gewonnene Retentat sehr hohe Anforderungen in bezug auf einen wartungsfreien, langzeitmöglichen Einsatz, an gute Wartungsfreundlichkeit und an einen unproblematischen, sehr schnell durchführbaren Austausch von Membrantrenneinrichtungen, falls die Membrantrenneinrichtungen entweder funktionslos werden, d.h. ihrer Trennaufgabe nicht mehr nachkommen können, oder gar im Falle einer vollständigen Zerstörung.

Die hier angesprochenen Abwässer sind mit einem hohen Grad an Fremdstoffen verschiedenster Art gemischt. Je höher der Anteil an Fremdstoffen in einem bestimmten Raumvolumen des Strömungsmediums ist, um so größer ist die Wahrscheinlichkeit, daß sich die Fremdstoffe auf den Membranen der Membrantrenneinrichtungen festsetzen und immer größere Bereiche auf der Membran, nachdem diese dort erst einmal einen haftenden Fremdstoffbereich (Cluster) gebildet haben, bilden und dann schließlich die ganze aktive Fläche des Membranelements bedeckt wird, so daß diese ihre Funktionsfähigkeit verliert. Man spricht in diesem Zusammenhang auch von einem vollständigen Verblocken der Membranelemente.

Vielfach geschieht dieses Verblocken aufgrund der Führung des mit Fremdstoffen angereicherten Strömungsmediums in der Vorrichtung, d.h. der Strömungsweg ist vielfach sehr kompliziert, so daß zum Erreichen einer Mindestströmgeschwindigkeit des Strömungsmediums das Strömungsmedium aufgrund des naturgemäß sich in der Vorrichtung aufgrund der Konstruktion ausbildenden hydraulischen Widerstands mit verhältnismäßig hohen Drücken durch die Vorrichtung geleitet werden muß. Dafür ist ein verhältnismäßig hoher Energieaufwand nötig.

Gravierender als das Problem des hohen Energieaufwands stellen sich aber die Probleme bei den einzusetzenden Membranen dar, d.h., daß diese konstruktiv so ausgelegt werden müssen, daß sie bei den bisherigen Vorrichtungen für die angesprochenen Zwecke überhaupt eingesetzt werden können. Die Vorrichtungen, die bisher für die voraufgeführten Zwecke verwendet wurden und werden, verwenden Flachmembranen der verschiedensten Art, die in den Vorrichtungen regelmäßig voneinander beabstandet zu einem Paket übereinandergestapelt sind, so daß das zu trennende Strömungsmedium die Vorrichtung vom Eingang zum Ausgang, die Membranelemente jeweils überstreichend, mäanderförmig durchströmt. Eine Verblockung und/oder eine Beschädigung nur eines einzigen Membranelements in einer derartigen Vorrichtung bedeutet, daß die gesamte Vorrichtung vollständig demontiert werden muß, das betreffende Membranelement ausgetauscht werden muß und wiederum zusammengebaut werden muß. Dieses hat zur Folge, daß dafür sehr viel Zeit nötig ist, was wiederum mit sehr hohen Betriebskosten verbunden ist. Für stark belastete Abwässer haben sich deshalb derartige Vorrichtungen und Membranelemente als nicht so gut geeignet herausgestellt.

Es wurde deshalb zur Vermeidung einer Demontage der bekannten Vorrichtungen der Versuch unternommen, der in derartigen Fällen auch heutzutage noch vielfach praktiziert wird, mittels eines gesonderten durch die Vorrichtung zu leitenden Reinigungsmittels, das mit chemischen Ingredenzien versetzt ist, die speziell für die Ablösung der Fremdstoffe von den Membranelementen sorgen sollen, die Vorrichtung zu reinigen. Dieses hat aber zur Folge, daß das mit chemischen Ingredenzien versetzte Reinigungsmittel wiederum ein gesondert zu sammelndes Gemisch darstellt, das ebenfalls nicht ohne weiteres in den Abwasserkreislauf gegeben werden kann, d.h. wiederum gesondert aufbereitet bzw. entsorgt werden muß.

Aus der JP-A-06 226 062 ist eine Vorrichtung bekannt, die ein Hohlfadenmodul betrifft, bei dem der Austausch, der Einbau und der Ausbau zerstörter Hohlfadenmembranen erleichtert werden soll. Gleichzeitig soll eine sehr hohe Luftdichtigkeit und Flüssigkeitsdichtigkeit des Hohlfadenmoduls sichergestellt werden.

Aus der JP-A-06 343 836 ist ein Membranmodul bekannt, das rohrförmig ausgebildet ist. Bei diesem Membranmodul ist der Strömungskanal am Ende verschlossen, so daß das Strömungsmedium die als Hohlfasern ausgebildeten Membranen quer durchströmen muß.

Es ist somit Aufgabe der vorliegenden Erfindung, eine Vorrichtung der eingangs genannten Art zu schaffen, die mit verhältnismäßig geringem Druck zum Aufbringen der Strömung des Strömungsmediums durch die Vorrichtung arbeitet, wobei die Vorrichtung ein sehr schnelles Auswechseln der Membrantrenneinrichtung oder bestimmter Teile der Membrantrenneinrichtung erlaubt, wenn eine Verminderung der Effektivität der Trennung des Strömungsmediums oder eine Verblockung einzelner Membranelemente der Trenneinrichtung beobachtet wird, die darüber hinaus auch einfach gereinigt werden kann, falls eine Beeinträchtigung der Trennwirkung oder eine Verblockung der Membranelemente beobachtet wird, und die in der Lage ist, über lange Zeiträume wartungsfrei zu arbeiten, wobei die Vorrichtung grundsätzlich an beliebigen geeigneten Orten unter geringem Energieaufwand für ihren Betrieb einsetzbar ist und einfach im Aufbau ist und somit kostengünstig her- und bereitstellbar ist.

Gelöst wird die Aufgabe gemäß der Erfindung durch eine Vorrichtung zum Filtern und Trennen von mit Fremdstoffen angereicherten Strömungsmedien (Rohmedien), insbesondere von flüssigen Medien nach dem Prinzip der Ultrafiltration, mittels einer Membranelemente aufweisenden Membrantrenneinrichtung, die durch wenigstens ein zwischen zwei in Strömungsrichtung des Strömungsmediums voneinander beabstandeten Halteelementen aufgespanntes Membranmodul gebildet wird und die Membranelemente des Membranmoduls derart angeordnet sind, daß sie im wesentlichen einen die Vorrichtung im wesentlichen axial durchquerenden Strömungskanal mit rohrförmigem Strömungsquerschnitt für das Strömungsmedium ausbilden, wobei das Strömungsmedium in ein mit Fremdstoffen angereichertes Retentat und ein mit Fremdstoffen abgereichertes Permeat, das in die Membranelemente hinein permeiert, getrennt wird und die Vorrichtung über wenigstens einen Auslaß verläßt.

Der Vorteil der erfindungsgemäßen Vorrichtung liegt im wesentlichen darin, daß die Membrantrenneinrichtung faktisch durch wenigstens ein oder eine Mehrzahl von unabhängig voneinander arbeitenden Membranmoduln gebildet wird, die in die Vorrichtung auf einfache Weise einsetzbar und wiederum auf einfache Weise aus der Vorrichtung entfernbar sind, wenn diese Funktionsstörungen aufweisen. Darüber hinaus gestattet diese Art der Ausbildung vorteilhafterweise auch eine einfache Herstellung der einzelnen, in die Vorrichtung einzusetzenden Moduln, die alle einen identischen Aufbau haben.

Hinzu kommt, daß aufgrund ihres identischen Aufbaus eine Bevorratung für Austauschzwecke bei geringstmöglichem Bevorratungsaufwand betrieben werden kann. Die Demontage und die Montage der Moduln in der Vorrichtung ist auf einfache Weise und schnell selbst durch ungeübte Personen möglich. Da die Moduln zwischen den beiden voneinander beabstandeten Halteelementen in der Vorrichtung aufgespannt sind, ist zudem der Strömungsweg des Strömungsmediums längs der Moduln und somit längs der darin aufgespannten Membranelemente von geringstmöglichem hydraulischen Widerstand gekennzeichnet. Eine komplizierte mäanderförmige Durchströmung der Vorrichtung, wie bei bisher verwendeten Vorrichtungen, ist nicht nötig, d.h. der Betriebsdruck, mit dem die erfindungsgemäße Vorrichtung betrieben werden kann, für das Strömungsmedium als solches, das längs der Membranelemente strömt, und ein gegebenenfalls dazu auszubildender permeatseitiger Unterdruck können gering gehalten werden, obwohl das für die Effektivität der Trennung des Strömungsmediums sehr wichtige Druckverhältnis zwischen Strömungsmedium und Permeat dennoch groß gehalten werden kann. Die Vorrichtung ist aus den vorgenannten Gründen vorteilhafterweise auch einfach und damit kostengünstig herstellbar und kann sogar in einer Basisversion völlig gehäusefrei beispielsweise in ein Abwasserbecken oder ein Strömungsrohr des Abwasserbeckens eingefügt werden und kann dennoch seine bestimmungsgemäße Funktion ohne Einschränkungen ausführen. Dadurch, daß die Membranelemente im wesentlichen einen Strömungskanal für das Strömungsmedium ausbilden, d.h. die Membranelemente vorzugsweise derart angeordnet sind, daß sie einen rohrförmigen Strömungsquerschnitt für das Strömungsmedium einschließen, wird eine optimale Umströmung mit dem Strömungsmedium geschaffen.

Bei einer vorzugsweisen Ausgestaltung der Vorrichtung sind die Membranmoduln im wesentlichen in Strömungsrichtung des Strömungsmediums innerhalb der Vorrichtung aufgespannt, d.h. durch diese Maßnahme wird erreicht, daß der hydraulische Widerstand, den die Vorrichtung dem Strömungsmedium beim Durchströmen der Vorrichtung entgegensetzt, auf einem Minimum gehalten wird. Zwar ist es auch grundsätzlich möglich, die Membranmoduln beispielsweise quer oder in einem bestimmten Anstellwinkel zum Strömungmedium in der Vorrichtung aufzuspannen, dieses wird allerdings regelmäßig nur in den Fällen der Fall sein, in denen konstruktive Vorgaben dieses erfordern.

Die Zahl der Membranelemente des jeweiligen Membranmoduls ist im wesentlichen davon bestimmt, wie groß die gewünschte aktive Membranfläche im Membranmodul sein soll. Die gewünschte aktive Membranfläche pro Membranmodul ist natürlich auch von der Länge des Membranmoduls, d.h. auch der Entfernung zwischen den beiden Halteelementen abhängig, zwischen denen das Membranmodul aufgespannt bzw. fixiert ist.

Als Membranelemente sind an sich beliebige geeignete Membranelemente denkbar unter der Maßgabe, daß sie auf vorbeschriebene Weise in dem vorbeschriebenen Membranmodul konstruktiv Aufnahme finden können. So können beispielsweise die Membranelemente vorzugsweise aus an sich bekannten Membrankissen (Kissenmembranen, Taschenmembranen, Membrantaschen; die voraufgeführten Begriffe sind alle Synonyme) gebildet werden, die bezüglich ihres grundsätzlichen Aufbaus im Stand der Technik bekannt sind, es können aber auch vorzugsweise Membranelemente in Form von Hohlfadenmembranen vorgesehen werden. Die Hohlfadenmembranen haben bei der erfindungsgemäßen Vorrichtung gegenüber anderen Membranen der Vorteil, daß diese sich allein aufgrund ihrer Bauform, nämlich als fadenförmige Längsgebilde, hervorragend zum Einbau in die Membranmoduln eignen und aufgrund ihrer konstruktiven Ausgestaltung auch insofern keinerlei zusätzlicher Stützelemente bedürfen. Zwar sind auch streifenförmige Membrankissen denkbar, die Hohlfadenmembran ist aber aufgrund ihrer Konstruktion naturgemäß ggf. am besten geeignet, in den erfindungsgemäßen Moduln und somit in der erfindungsgemäßen Vorrichtung verwendet zu werden.

Grundsätzlich können die Membranelemente derart ausgebildet sein, daß sie an ihren zu den beiden Halteelementen gerichteten Enden offen sind, d.h. an diesen Enden Permeataustrittsöffnungen bilden, was sowohl für Hohlfadenmembranen als auch Membrankissen möglich ist. Es hat sich als vorteilhaft und somit ausreichend herausgestellt, daß die Membranelemente an einem zu einem der Halteelemente gerichteten Ende geschlossen ausgebildet sind, so daß nur das andere Ende eine Öffnung zum Austritt des Permeats bildet.

Bei einer weiteren vorteilhaften Ausgestaltung der Vorrichtung sind die Endbereiche der Membranelemente an ihrem geschlossenen Ende in einem ersten Aufnahmeelement gegen das Strömungsmedium dichtend fixiert, wobei die Fixierung vorzugsweise mittels eines geeignet ausgewählten Kunststoffs bzw. Gießharzes ausgeführt werden kann. Um das Membranmodul aus den Halteelementen der Vorrichtung schnell entfernen zu können bzw. dort befestigen zu können, sind vorzugsweise das erste und eine weiteres zweites Aufnahmeelement, siehe unten, im ersten bzw. zweiten Halteelement lösbar befestigbar, d.h. es kann über das Aufnahmeelement in das Halteelement gesteckt bzw. aus diesem in umgekehrter Reihenfolge entfernt werden.

Bei einer weiteren vorteilhaften anderen Ausführungsform der Vorrichtung sind die Endbereiche der Membranelemente an dem zum zweiten Halteelement gerichteten offenen Ende in einem zweiten Aufnahmeelement gegen das Strömungsmedium dichtend fixiert, d.h. es ist quasi ein identischer Aufbau der Aufnahmemittel der Membranelemente im zweiten Aufnahmeelement und eine quasi identische Fixierung gegen das Strömungsmedium möglich wie beim oben beschriebenen ersten Aufnahmeelement. Auch hier erfolgt die eigentliche Fixierung der Endbereiche im Aufnahmeelement mittels eines geeignet wählbaren Gießharzes bzw. Kunststoffs.

Um ein optimales Strömen des Strömungsmediums längs der Membranelemente zu gewährleisten, d.h. diese möglichst optimal mit Strömungsmedium umfließen zu lassen, so daß diese optimal ihrer bestimmungsgemäßen Trennfunktion nachkommen können, weisen vorzugsweise das erste und das zweite Aufnahmeelement ein im wesentlichen zentral angeordnetes Durchgangsloch für das Durchströmen des Strömungsmediums auf. Da die Membranelemente selbst in bestimmten vorwählbaren Abständen voneinander beabstandet auch ein Längsströmen des Strömungsmediums an den Seiten der Membranelemente ermöglichen, die dem inneren Strömungskanal abgewandt sind, können somit auch die Rückseiten bzw. die dem Strömungskanal abgewandten Seiten ebenfalls gut vom Strömungsmedium umflossen werden.

Bei einer noch anderen vorteilhaften Ausgestaltung der Vorrichtung weist das zweite Aufnahmeelement einen Permeatsammelkanal auf, in den alle offenen Enden der Membranelemente münden, d.h. auf diese Weise kann das Permeat einfach gesammelt werden, so daß aufwendige Konstruktionen für die Permeatsammelung der Vorrichtung vermieden werden.

Die Halteelemente selbst sind vorteilhafterweise mittels wenigstens eines Abstandsbolzens voneinander fixierbar, wobei die Einheit aus Halteelementen und Abstandsbolzen selbst für einen Austausch der Moduln nicht demontiert zu werden braucht, da aufgrund der Eigenelastizität der Membranmoduln diese in die entsprechenden Aufnahmeöffnungen in den Halteelementen über die jeweiligen Aufnahmeelemente hineingesteckt bzw. aus diesen entfernt werden können.

Somit ist vorzugsweise das erste und das zweite Aufnahmeelement mittels lösbarer Sicherungselemente an den Halteelementen fixierbar, wobei die Sicherungselemente beispielsweise durch Sicherungsringe in Form von sogenannten Seeger-Ringen gebildet werden können.

Wie eingangs erläutert, ist die Vorrichtung selbst nicht zwingend mit einem Gehäuse zu versehen, um ihre bestimmungsgemäße Funktion ausführen zu können. Für bestimmte Anwendungsfälle kann es jedoch vorteilhaft sein, die Vorrichtung derart auszubilden, daß diese ein rohrförmiges, wenigstens die Halteelemente und die Membranmoduln umgebendes Gehäuse aufweist, wobei in dem Gehäuse aber auch alle Zufuhr- und Abfuhrelemente und sonstige für den Aufbau der Vorrichtung gegebenenfalls nötige Mittel untergebracht bzw. aufgenommen werden können.

Ist ein Gehäuse vorgesehen, so ist wenigstens das zweite Aufnahmeelement gegenüber dem Innenraum des Gehäuses gedichtet fixierbar, um auf einfache Weise den Permeatabfluß von den Filterelementen aus dem Gehäuse zu gewährleisten, d.h. sicherzustellen, daß das Permeat mit dem Strömungsmedium bzw. dem mit Fremdstoffen angereicherten Retentat (Konzentrat) nicht in Verbindung kommt. Im Gehäuse selbst können auch noch gesonderte Zufuhr- und Abfuhrelemente für das zu trennende Strömungsmedium und das aufkonzentrierte Retentat vorgesehen sein, die wiederum selbst gegenüber der Innenwand des Rohrs gedichtet ausgebildet sind.

Die Erfindung wird nun unter Bezugnahme auf die nachfolgenden schematischen Zeichnungen anhand eines Ausführungsbeispiels im einzelnen beschrieben. Darin zeigen:
- Fig. 1: einen Schnitt durch die Vorrichtung zur Darstellung ihres prinzipiellen Aufbaus, wobei die Vorrichtung hier ein gesondertes Gehäuse aufweist,
- Fig. 2: einen Schnitt entlang der Linie D von Fig. 1,
- Fig. 3: einen Schnitt entlang der Linie A von Fig. 1,
- Fig. 4: einen Schnitt entlang der Linie B von Fig. 1,

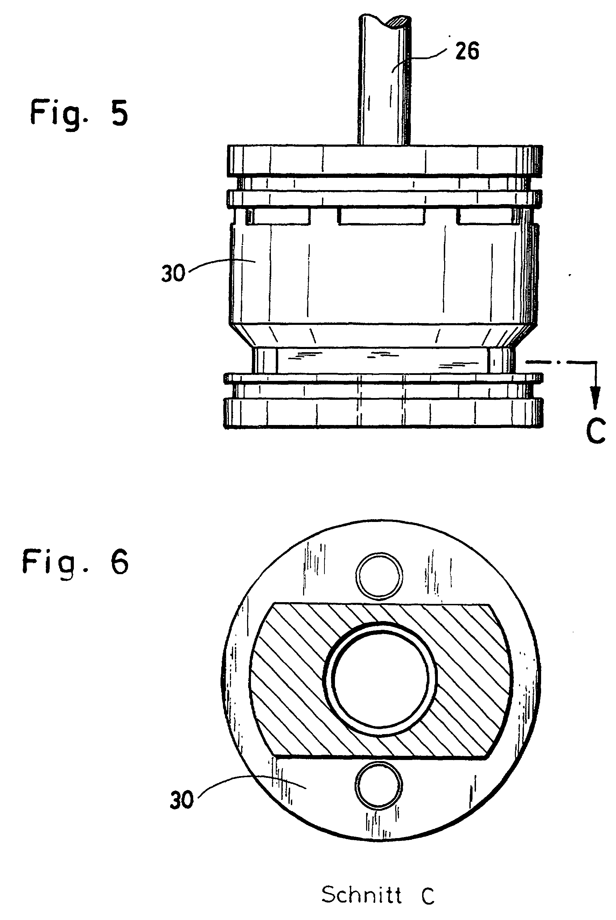

- Fig. 5: eine Seitenansicht eines Aufnahmekörpers, in den die offenen Enden der Membranelemente münden und in dem der Permeatsammel- und -abflußkanal angeordnet ist und in dem ein Halteelement aufgenommen ist, und
- Fig. 6: einen Schnitt entlang der Linie C von Fig. 5.

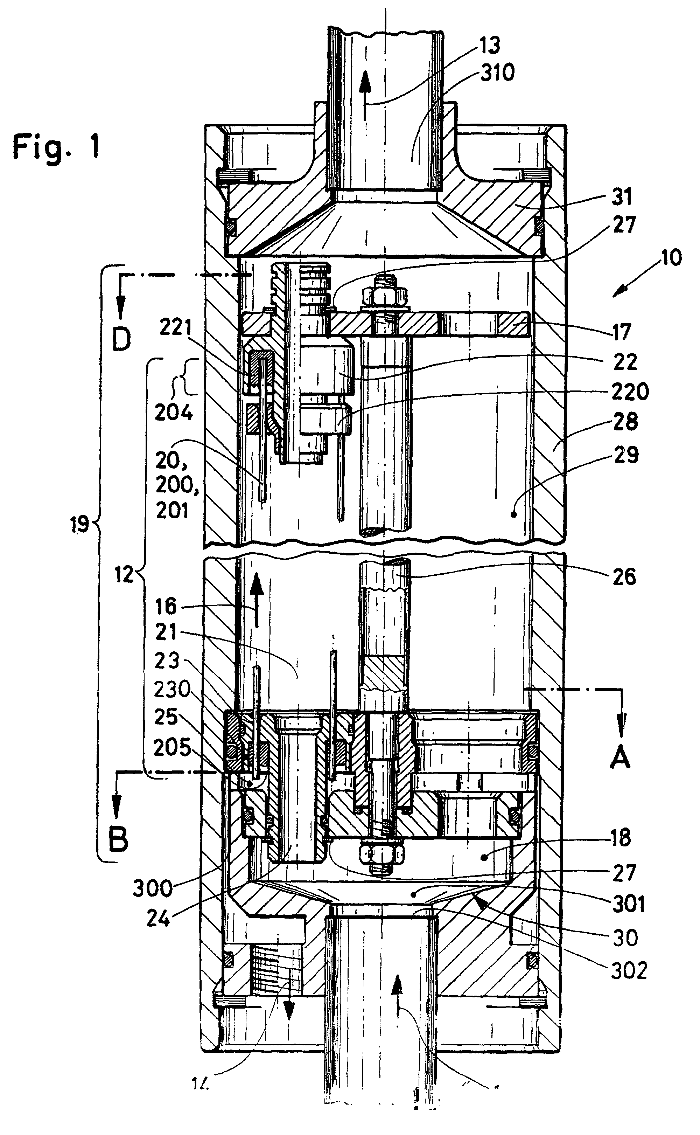

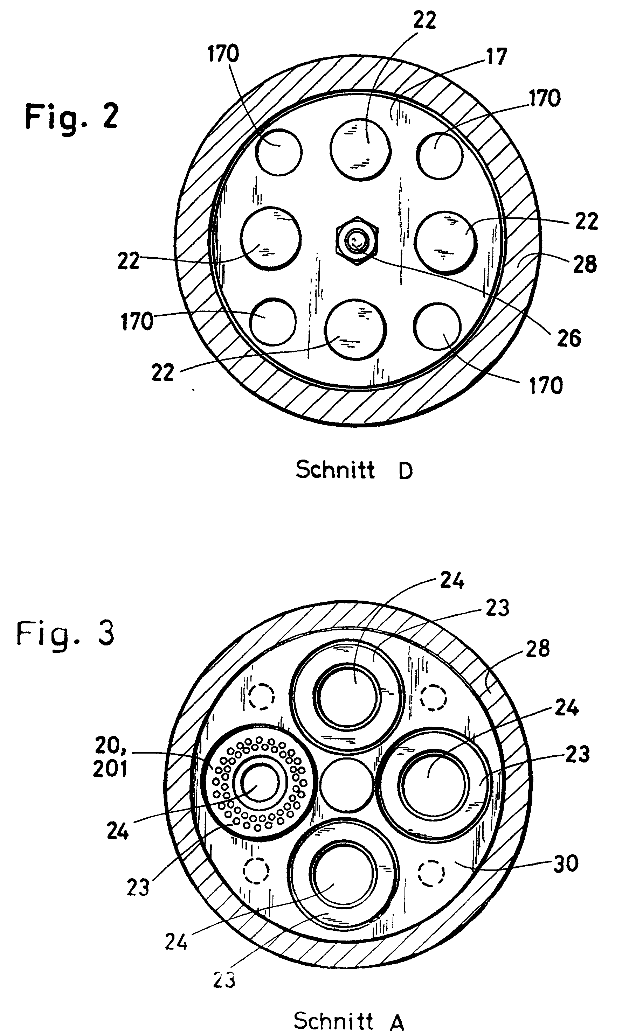

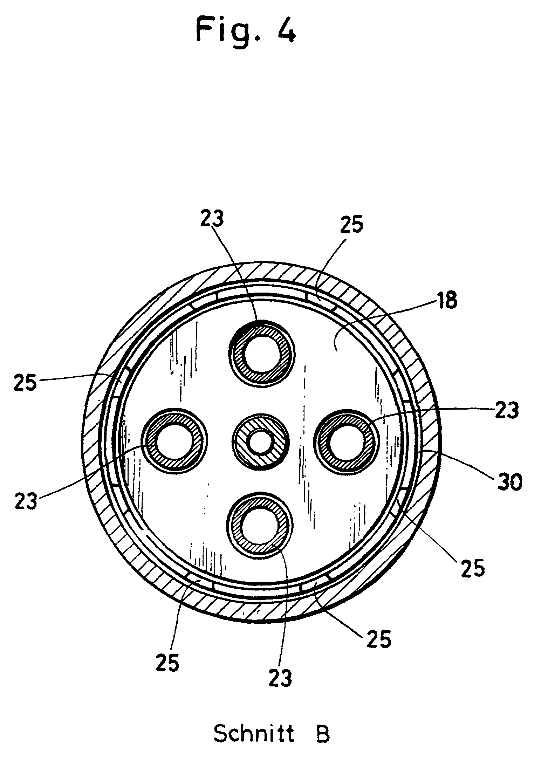

Zunächst wird Bezug genommen auf die Darstellung gemäß Fig. 1, aus der im Schnitt der Aufbau der erfindungsgemäßen Vorrichtung 10 im wesentlichen ersichtlich ist. Das zentrale Element der Vorrichtung 10 umfaßt zwei voneinander beabstandete scheibenförmige Halteelemente 17, 18, die mittels eines Abstandsbolzens 26 in festem Abstand voneinander gehalten werden. Der Abstandsbolzen 26 weist an seinen jeweiligen Enden Gewindeansätze auf, auf die die beiden Halteelemente 17, 18 jeweils gesteckt werden und mittels einer jeweiligen Mutter mit dem Abstandsbolzen 26 zwar grundsätzlich lösbar, aber fest verbunden werden. Die Halteelemente 17, 18 weisen in der Draufsicht einen Aufbau auf, wie er aus der Fig. 2, dort ist das erste Halteelement 17 dargestellt, und in Fig. 4, dort ist eine Draufsicht auf Halteelement 18 dargestellt, ersichtlich ist. Die Halteelemente 17, 18 weisen eine Mehrzahl von auf ihrer Oberfläche verteilten Bohrungen auf, die zur Aufnahme der ersten bzw. zweiten Aufnahmeelemente 22, 23 dienen, die noch weiter unten im Zusammenhang mit dem Aufbau des Membranmoduls 19 im einzelnen beschrieben werden. In die vorerwähnten Bohrungen greifen die ersten und zweiten Aufnahmeelemente 22, 23 ein bzw. werden durch diese hindurchgesteckt und mittels Sicherungsringen 27, vergleiche Fig. 1, lösbar befestigt. Im Zentrum der jeweiligen Halteelemente 17, 18 sind Durchgangslöcher angeordnet, durch die der Gewindeansatz bzw. ein Teil des einseitig verjüngt ausgebildeten Abstandsbolzens 26 hindurchragt und die Halteelemente 17, 18 jeweils auf vorbeschriebene Weise fixiert.

Bei der in Fig. 1 dargestellten Ausgestaltung der Vorrichtung 10 sind in die jeweiligen Löcher auf erstem und zweitem Halteelement 17, 18, die zentral bzw. jeweilig fluchtend zueinander ausgebildet sind, vier Membranmoduln 19 eingesetzt, die selbst folgenden Grundaufbau aufweisen. Alle Membranmoduln 19 weisen einen identischen Aufbau auf, so daß nachfolgend nur ein Membranmodul 19 bezüglich seines Aufbaus beschrieben wird.

An beiden Enden des Membranmoduls 19 sind jeweils Aufnahmeelemente angeordnet, wobei das erste Aufnahmeelement 22 in der Fig. 1 oben dargestellt ist, wohingegen das zweite Aufnahmeelement in der Fig. 1 unten dargestellt ist. Beide Aufnahmeelemente 22, 23 weisen ein jeweiliges zentrales Durchgangsloch 24 für den Durchtritt von Strömungsmedium (Rohmedium, Feed) 11 auf. Beispielhaft sind in Fig. 3 die vier in der Vorrichtung 10 angeordneten zweiten Aufnahmeelemente 23 dargestellt, und zwar derart, daß diese eine Mehrzahl von Membranelementen 20 in Form von Hohlfadenmembranen 201 aufweisen. Die Anordnung der Membranelemente 20 als Hohlfadenmembranen 201 ist hier derart gewählt, daß sie im wesentlichen einen Strömungskanal 21, vergleiche Fig. 1, für das Strömungsmedium 11 ausbilden. Die Hohlfadenmembranen 201 sind in radialer und kreisförmiger Richtung gering voneinander beabstandet, so daß das Strömungsmedium 11 auch aus dem Durchgangsloch 24 austretend durch die Abstände zwischen den Hohlfadenmembranen 201 in den Gehäuseinnenraum 29 eintreten kann. Auf diese Weise wird der gesamte Gehäuseinnenraum 29 zwischen dem Austritt aus dem Durchgangsloch 24 des zweiten Aufnahmeelements 23 und im wesentlichen dem Durchgangsloch 24 des ersten Aufnahmeelements 22 ausgefüllt. Entsprechend der Dimension der ersten und zweiten Aufnahmeelemente 22, 23 und der sich ergebenden Anzahl der vorzusehen gewünschten Hohlfadenmembranen 201 ist die konstruktive Ausgestaltung bezüglich dieser Konstruktionsmerkmale des ersten und des zweiten Aufnahmeelements 22, 23 gleich, so daß bei der Herstellung des Membranmoduls 19 bei dafür zunächst aufeinanderliegendem ersten und zweiten Aufnahmeelement 22, 23 die jeweiligen Hohlfadenmembranen 201 durch entsprechende Aufnahmelöcher für die Hohlfadenmembranen nur hindurchgesteckt zu werden brauchen, wobei beim oberen ersten Aufnahmeelement 22 ein gesondertes Führungselement 220 vorgesehen sein kann, das nach dem Einfädelvorgang der Hohlfadenmembranen 201 auf das erste Aufnahmeelement 22 geschoben werden kann. Die Hohlfadenmembranen 201 werden dann, nachdem sie in jeweilige ringförmige Aufnahmen 221 bzw. 230 eingesetzt worden sind und auf entsprechende Länge voneinander beabstandet worden sind, mit geeignetem Gießharz in den jeweiligen Aufnahmeelementen 22, 23 derart befestigt, daß die Endbereiche 204, 205 der Hohlfadenmembranen 201 in dem jeweiligen ersten bzw. zweiten Aufnahmeelement 22, 23 gegen das Strömungsmedium 11 dichtend fixiert werden.

Bei der hier beschriebenen Ausgestaltung der Vorrichtung 10 sind die Hohlfadenmembranen 201 an dem zum ersten Halteelement 17 gerichteten Ende 202 geschlossen ausgebildet, wobei der Verschluß der Hohlfadenmembranen 201 durch dieses vorbeschriebene Gießharz beim dortigen Fixieren ausgebildet werden kann.

Das Ende 203, das zum zweiten Aufnahmeelement 23 hin gerichtet ist, ist geöffnet ausgebildet, wobei die dortigen Öffnungen der Hohlfadenmembranen 201 dadurch geschaffen werden, daß nach dem Eingießen mit Gießharz oder geeignetem Kunststoff im unteren zweiten Aufnahmeelement 23 nach dem Aushärten das stirnseitige Ende des Aufnahmeelements 23 geschliffen oder sonstwie geeignet mechanisch bearbeitet wird, so daß die Öffnungen der Hohlfadenmembranen freigelegt werden. Faktisch besteht somit ein Membranmodul 19 lediglich aus einer vorgewählten Menge von Membranelementen 20, die allerdings nicht nur Hohlfadenmembranen 201 sein können, sondern auch geeignete Membrankissen 200, und dem jeweiligen mit den Membranelementen 20 auf vorbeschriebene Weise an deren jeweiligen Endbereichen 204, 205 verbundenen ersten Aufnahmeelement 22 und dem zweiten Aufnahmeelement 23. Das Membranmodul 19 verzichtet vollständig auf mechanisch stabilisierende Maßnahmen und ist ohne jeweilige Befestigung in den Halteelementen 17 und 18 an sich mechanisch instabil. Durch die feste Fixierung allerdings in den Halteelementen 17, 18 wird eine für den bestimmungsgemäßen Betrieb der Vorrichtung 10 ausreichende mechanische Stabilität geschaffen.

Bei dem in den Figuren dargestellten Ausführungsbeispiel der Vorrichtung 10 ist das zweite Halteelement 18 in einem Aufnahmekörper 30 in einer dort ausgebildeten Vertiefung, siehe Fig. 1, eingesetzt. Die offenen Enden 203 der Hohlfadenmembranen 201 (was auch allgemein für Membrankissen 200 als Membranelemente 20 gelten würde) münden in einen Permeatabflußkanal 25, vergleiche die Figuren 1 und 4, der radial nach außen führt, wobei das Permeat 14, das aus den Innenräumen der Hohlfadenmembranen 201 in den Permeatsammelkanal 25 hineinfließt, auf geeignete Weise von der Vorrichtung 10 weggeführt wird.

Bei der in den Figuren dargestellten Ausführungsform der Vorrichtung 10 ist die Vorrichtung 10 mit einem rohrförmigen Gehäuse 28 versehen, das wenigstens die Halteelemente 18, 19 sowie die Membranmoduln 19 einschließlich aller übrigen Elemente der Vorrichtung 10 in sich einschließt. Das rohrförmige Gehäuse 28, das beispielsweise aus geeignetem Kunststoffhalbzeug oder Metallhalbzeug bestehen kann, umschließt auch den Bereich des in das Gehäuse 28 eingesetzten Aufnahmekörpers 30, der, wie gesagt, das zweite Halteelement 18 aufnimmt, kreisförmig, und zwar derart, daß zwischen dem äußeren zylinderförmigen Abschnitt 300 des Aufnahmekörpers 30 ein Spalt gebildet wird, so daß das aus dem Permeatsammelkanal 25 austretende Permeat 14 über einen Auslaß 15 für das Permeat 14, der bei der in den Figuren dargestellten Ausgestaltung der Vorrichtung 10 im Aufnahmekörper 30 selbst ausgebildet ist, aus der Vorrichtung 10 herausführbar ist und seiner geeigneten Bestimmung zuführbar ist. Im Aufnahmekörper 30 ist zudem ein im wesentlichen zentral angeordneter Innenraum 301 ausgebildet, der mittels eines dort ebenfalls im wesentlichen zentral ausgebildeten Durchgangslochs 302 eine Zufuhröffnung und einen Verteilungsraum für das der Vorrichtung 10 zugeführte Strömungsmedium 11 bildet, das mittels der Vorrichtung 10 zu trennen ist. Vom Innenraum 301 aus gelangt das Strömungsmedium 11 in die erwähnten Durchgangslöcher 24 im zweiten Aufnahmeelement 23 und kann von dort den Innenraum 29 des Gehäuses 28 längs der Strömungskanäle 21 durchqueren, um dann durch die Durchgangslöcher 24 des ersten Aufnahmeelements 22 zu einem Verschlußkörper 31 zu fließen, der ein im wesentlichen zentrales Durchgangsloch 310 aufweist, durch das das aufkonzentrierte Strömungsmedium 11 als Retentat 13 die Vorrichtung 10 verläßt. Sowohl der Aufnahmekörper 30 als auch der Verschlußkörper 31 sind über geeignete Dichtmittel, beispielsweise in Form eines kreisförmig umlaufenden Ringes aus elastomerem Werkstoff, der in jeweiligen ringförmigen, umlaufenden Nuten im Aufnahmekörper 30 bzw. Verschlußkörper 31 angeordnet wird, gegenüber dem Gehäuse 28 abdichtbar. Umlaufende Sicherungsringe 303 und 311 sichern den axialen Sitz des Aufnahmekörpers 30 und des Verschlußkörpers 31 im Gehäuse 28, wobei diese Ringe leicht entfernt werden können, so daß der Aufnahmekörper 30 mitsamt den Membranmoduln 19 als einstückiges Element aus dem Gehäuse 28 entfernt kann, was gleichermaßen für den Verschlußkörper 31 gilt, der auf gleiche Weise als gesondertes Teil entfernbar ist.

Die in der Vorrichtung 10 angeordneten Membranmoduln 19, von denen bei der in den Figuren dargestellten Ausführungsform hier beispielsweise vier vorgesehen sind, werden in ihrer axialen Länge durch die axiale Länge der Membranelemente 20 bestimmt. Ohne daß die Vorrichtung 10 bzw. das Gehäuse 28 der Vorrichtung 10 verändert zu werden braucht, können unterschiedlich lange Membranmoduln 19 in der Vorrichtung 10 untergebracht sein bzw. die Vorrichtung 10 in ihren wesentlichen Bestandteilen bilden. Lediglich der Abstandsbolzen 26, der auch als rohrförmiges Gebilde ausgebildet sein kann, da er nur geringe axiale Kräfte aufnehmen muß, muß in Abhängigkeit der gewählten Länge der Membranelemente 20 der Membranmoduln 19 angepaßt werden. Geringe axiale Längenunterschiede der Membranelemente 20 der Membranmoduln 19 können durch unterschiedliche umlaufende Nuten in axialen Vorsprüngen der ersten und zweiten Aufnahmeelementen 22, 23 um deren Durchgangsloch 24 außen herum ausgeglichen werden, in die, je nach Länge der Membranmoduln 19, Sicherungsringe 27 lösbar eingesetzt werden können, so daß die Membranmoduln 19 an den Halteelementen 17, 18 lösbar befestigbar sind.

Die Vorrichtung 10 kann beispielsweise mittels Druckluft von ca. 1 bar, die durch den Strömungsweg des Strömungsmediums 11 durch die Vorrichtung 10 geleitet wird, gereinigt werden. Dabei wird gleichzeitig Druckluft von 6 bar in die Membranelemente 20 über den Strömungsweg des Permeats 14 geleitet.

### Bezugszeichenliste

- 10: Vorrichtung
- 11: Strömungsmedium (Rohmedium, Feed)
- 12: Membran trenneinrichtung
- 13: Retentat
- 14: Permeat
- 15: Auslaß (Permeat)
- 16: Strömungsrichtung
- 17: Halteelement (erstes)
- 170: Loch
- 18: Halteelement (zweites)
- 19: Membranmodul
- 20: Membranelement
- 200: Membrankissen
- 201: Hohlfadenmembran
- 202: Ende (geschlossen) Membranelement
- 203: Ende (geöffnet) Membranelement
- 204: Endbereich
- 205: Endbereich
- 21: Strömungskanal
- 22: erstes Aufnahmeelement
- 220: Führungselement
- 221: Aufnahme
- 23: zweites Aufnahmeelement
- 230: Aufnahme
- 24: Durchgangsloch
- 25: Permeatsammelkanal
- 26: Abstandsbolzen
- 27: Sicherungselement
- 28: Gehäuse
- 29: Gehäuseinnenraum
- 30: Aufnahmekörper
- 300: Abschnitt
- 301: Innenraum
- 302: Durchgangsloch
- 303: 3 Sicherungsring
- 31: Verschlußkörper
- 310: Durchgangsloch
- 311: Sicherungsring

## Patentansprüche

1. Vorrichtung (10) zum Filtern und Trennen von mit Fremdstoffen angereicherten Strömungsmedien (Rohmedien) (11), insbesondere von flüssigen Medien nach dem Prinzip der Ultrafiltration, mittels einer Membranelemente (20) aufweisenden Membrantrenneinrichtung (12), die durch wenigstens ein zwischen zwei in Strömungsrichtung (16) des Strömungsmediums (11) voneinander beabstandeten Halteelementen (17, 18) aufgespanntes Membranmodul (19) gebildet wird, und die Membranelemente (20) des Membranmoduls (19) derart angeordnet sind, daß sie im wesentlichen einen die Vorrichtung (10) im wesentlichen axial durchquerenden Strömungskanal (21) mit rohrförmigem Strömungsquerschnitt für das Strömungsmedium (11) ausbilden, wobei das Strömungsmedium (11) in ein mit Fremdstoffen angereichertes Retentat (13) und ein mit Fremdstoffen abgereichertes Permeat (14), das in die Membranelemente (20) hinein permeiert, getrennt wird und die Vorrichtung (10) über wenigstens einen Auslaß (15) verläßt.

2. Vorrichtung nach Anspruch 1, dadurch gekennzeichnet, daß das Membranmodul (19) im wesentlichen in Strömungsrichtung (16) des Strömungsmediums (11) aufgespannt ist.

3. Vorrichtung nach einem oder beiden der Ansprüche 1 oder 2, dadurch gekennzeichnet, daß die Membranelemente (20) in Form von Membrankissen (200) ausgebildet sind.

4. Vorrichtung nach einem oder mehreren der Ansprüche 1 oder 2, dadurch gekennzeichnet, daß die Membranelemente (20) in Form von Hohlfadenmembranen (201) ausgebildet sind.

5. Vorrichtung nach einem oder mehreren der Ansprüche 1 bis 4, dadurch gekennzeichnet, daß die Membranelemente (20) an einem zu einem der Halteelemente (17) gerichteten Ende (202) geschlossen ausgebildet sind.

6. Vorrichtung nach Anspruch 5, dadurch gekennzeichnet, daß die Endbereiche (204) der Membranelemente (20) an ihrem geschlossenen Ende (202) in einem ersten Aufnahmeelement (22) gegen das Strömungsmedium (11) dichtend fixiert sind.

7. Vorrichtung nach Anspruch 6, dadurch gekennzeichnet, daß das erste Aufnahmeelement (22) im Halteelement (17) lösbar befestigbar ist.

8. Vorrichtung nach einem oder mehreren der Ansprüche 1 bis 5, dadurch gekennzeichnet, daß die Endbereiche (205) der Membranelemente (20) an dem zum zweiten Halteelement (18) gerichteten offenen Ende (203) in einem zweiten Aufnahmeelement (23) gegen das Strömungsmedium (11) dichtend fixiert sind.

9. Vorrichtung nach Anspruch 8, dadurch gekennzeichnet, daß das erste und zweite Aufnahmeelement (22, 23) ein im wesentlichen zentral angeordnetes Durchgangsloch (24) für das Durchströmen des Strömungsmediums (11) aufweisen.

10. Vorrichtung nach einem oder beiden der Ansprüche 8 oder 9, dadurch gekennzeichnet, daß das zweite Aufnahmeelement (23) einen Permeatsammelkanal (25) aufweist, in den alle offenen Enden (203) der Membranelemente (20) münden.

11. Vorrichtung nach einem oder mehreren der Ansprüche 1 bis 10, dadurch gekennzeichnet, daß die Halteelemente (17, 18) mittels wenigstens eines Abstandsbolzens (26) voneinander beabstandet fixierbar sind.

12. Vorrichtung nach einem oder mehreren der Ansprüche 9 bis 11, dadurch gekennzeichnet, daß das erste und zweite Abstandselement (22, 23) mittels lösbaren Sicherungselementen (27) an den Halteelementen (17, 18) fixierbar sind.

13. Vorrichtung nach einem oder mehreren der Ansprüche 1 bis 12, dadurch gekennzeichnet, daß diese ein rohrförmiges, wenigstens die Halteelemente (17, 18) und das bzw. die Membranmodul(e) (19) umgebendes Gehäuse (28) aufweist.

14. Vorrichtung nach Anspruch 13, dadurch gekennzeichnet, daß wenigstens das zweite Aufnahmeelement (23) gegenüber dem Innenraum (29) des Gehäuses (28) gedichtet fixierbar ausgebildet ist.

## Claims

1. Apparatus (10) to filter and separate flowing media containing accumulations of foreign substances (raw media) (11) especially liquid media by the ultrafiltration principle by means of a membrane separation device (12) having a membrane element (20) and formed by at least one membrane module (19) stretched between two holder elements (17, 18) spaced a distance apart in the direction of flow (16) of the flowing medium (11), the membrane elements (20) of the membrane module (19) being arranged in such a way that they form a flow channel (21) traversing the apparatus (10) essentially axially and with a tubular cross-section of flow for the flowing medium (11), whereby the flowing medium (11) is separated into a retentate (13) enriched with foreign substances and a permeate (14) depleted in foreign substances which permeates into the membrane elements (20) and leaves the apparatus (10) through at least one outlet (15).

2. Apparatus according to Claim 1, characterized in that the membrane module (19) is stretched essentially in the direction of flow (16) of the flowing medium (11).

3. Apparatus according to one or both of the Claims 1 or 2, characterized in that the membrane elements (20) are constructed in the form of membrane cushions (200).

4. Apparatus according to one or more of the Claims 1 or 2, characterized in that the membrane elements (20) are constructed in the form of hollow fibre membranes (201).

5. Apparatus according to one or more of the Claims 1 to 4, characterized in that the membrane elements (20) are constructed so as to be closed at one end (202) directed towards one of the holder elements (17).

6. Apparatus according to Claim 5, characterized in that the end regions (204) of the membrane elements (20) are fixed at their closed end (202) into a first socket element (22) so as to be sealed relative to the flowing medium (11).

7. Apparatus according to Claim 6, characterized in that the first socket element (22) is fastened into the holder element (17) in such a way that it can be detached.

8. Apparatus according to one or more of the Claims 1 to 5, characterized in that the end regions (205) of the membrane elements (20) are fixed at the open end (203) directed towards the second holder element (18) into a second socket element (23) so as to be sealed relative to the flowing medium (11).

9. Apparatus according to Claim 8, characterized in that the first and second socket elements (22, 23) have a passageway hole (24) arranged essentially centrally for the flowing medium (11) to flow through.

10. Apparatus according to one or both of the Claims 8 or 9, characterized in that the second socket element (23) has a permeate collection channel (25) into which all of the open ends (203) of the membrane elements (20) open.

11. Apparatus according to one or more of the Claims 1 to 10, characterized in that the holder elements (17, 18) can be fixed at a distance apart from one another by at least one spacer bolt (26).

12. Apparatus according to one or more of the Claims 9 to 11, characterized in that the first and second spacer element (22, 23) are attachable to the holder elements (17, 18) by detachable securing elements (27).

13. Apparatus according to one or more of the Claims 1 to 12, characterized in that it has a tubular housing (28) surrounding at least the holder elements (17, 18) and the membrane module(s) (19).

14. Apparatus according to Claim 13, characterized in that at least the second socket element (23) is constructed so as to be attachable in a sealed manner relative to the interior space (29) of the housing (28).

## Revendications

1. Dispositif. (10) pour filtrer et séparer des milieux fluides enrichis en impuretés (milieux bruts) (11), en particulier des milieux liquides, selon le principe de l'ultrafiltration, au moyen d'un dispositif de séparation à membranes (12) présentant des éléments de membranes (20) qui est formé par au moins un module de membrane (19) monté entre deux éléments supports (17, 18) espacés l'un de l'autre dans le sens d'écoulement (16) du milieu fluide (11), dans lequel les éléments de membranes (20) du module de membrane (19) sont disposés de façon à former un canal d'écoulement (21) traversant le dispositif (10) sensiblement dans le sens axial avec une section d'écoulement tubulaire pour le milieu fluide (11) dans lequel le milieu fluide (11) est séparé en un rétentat enrichi en impuretés (13) et en un perméat appauvri en impuretés (14) qui pénètre par perméation dans les éléments de membranes (20) et qui quitte le dispositif (10) par l'intermédiaire d'au moins une sortie (15).

2. Dispositif selon la revendication 1, caractérisé en ce que le module de membrane (19) est monté sensiblement dans le sens d'écoulement (16) du milieu fluide (11).

3. Dispositif selon l'une des revendications 1 et 2 ou les deux, caractérisé en ce que les éléments de membranes (20) se présentent sous la forme de coussins de membranes (200).

4. Dispositif selon l'une des revendications 1 et 2, ou les deux, caractérisé en ce que les éléments de membranes (20) se présentent sous la forme de membranes à filaments creux (201).

5. Dispositif selon l'une ou plusieurs des revendications 1 à 4, caractérisé en ce que les éléments de membranes (20) sont fermés à une extrémité (202) dirigée vers l'un des éléments supports (17).

6. Dispositif selon la revendication 5, caractérisé en ce que les zones d'extrémité (204) des éléments de membranes (20) sont fixées de manière étanche au milieu fluide (11) au niveau de leur extrémité fermée (202) dans un premier élément de positionnement (22).

7. Dispositif selon la revendication 6, caractérisé en ce que le premier élément de positionnement (22) peut être monté de manière amovible dans l'élément support (17) .

8. Dispositif selon l'une ou plusieurs des revendications 1 à 5, caractérisé en ce que les zones d'extrémité (205) des éléments de membranes (20) sont fixées de manière étanche au milieu fluide (11) au niveau de l'extrémité ouverte (203) dirigée vers le deuxième élément support (18) dans un deuxième élément de positionnement (23).

9. Dispositif selon la revendication 8, caractérisé en ce que les premier et deuxième éléments de positionnement (22, 23) présentent un trou de passage (24) sensiblement centré pour l'écoulement du milieu fluide (11).

10. Dispositif selon l'une des revendications 8 et 9 ou les deux, caractérisé en ce que le deuxième élément de positionnement (23) présente un canal de collecte de perméat (25) dans lequel débouchent toutes les extrémités ouvertes (203) des éléments de membranes (20).

11. Dispositif selon l'une ou plusieurs des revendications 1 à 10, caractérisé en ce que les éléments supports (17, 18) peuvent être fixés à une certaine distance l'un de l'autre à l'aide d'au moins un boulon entretoise (26).

12. Dispositif selon l'une ou plusieurs des revendications 9 à 11, caractérisé en ce que les premier et deuxième éléments espacés (22, 23) peuvent être fixés au moyen d'éléments de retenue amovibles (27) dans les éléments supports (17, 18).

13. Dispositif selon l'une ou plusieurs des revendications 1 à 12, caractérisé en ce qu'il présente un boîtier tubulaire (28) entourant au moins les éléments supports (17, 18) et le (les) module(s) de membrane(s) (19).

14. Dispositif selon la revendication 13, caractérisé en ce qu'au moins le deuxième élément de positionnement (23) est réalisé de manière à pouvoir être fixé de façon étanche par rapport à l'intérieur (29) du boîtier (28).
